# EUROPÄISCHE PATENTANMELDUNG

(11) **EP 1 204 229 A1**
(43) Veröffentlichungstag der Anmeldung: **08.05.2002**
(21) Anmeldenummer: 00125071.1
(22) Anmeldetag: 17.11.2000
(51) Int. Cl.: H04H 1/00

(54) **Verfahren zum Vorführen von Informationen die in einem Computer gespeichert sind**

(30) Priorität: 29.09.2000 DE 10048830
(71) Anmelder: Trend Network AG, 40210 Düsseldorf (DE)
(72) Erfinder: Möller, Michael, 40625 Düsseldorf (DE); Schäffer, Christian, 86343 Königsbrunn (DE)
(74) Vertreter: Rox, Thomas Dr.

(57) **Zusammenfassung**

Die Erfindung betrifft ein Verfahren zum Vorführen von Informationen, bei dem Stamminformationen auf einem Computer gespeichert werden, die danach auf mindestens einer Vorführvorrichtung vorgeführt werden, bei dem das technische Problem, daß Informationen in hoher Qualität mit gleichzeitiger Aktualisierbarkeit vorgeführt werden können, dadurch gelöst ist, daß das Vorführen der auf dem Computer gespeicherten Stamminformationen unterbrochen wird und daß aktuelle Zusatzinformationen auf den Computer übertragen und direkt auf der mindestens einen Vorführvorrichtung vorgeführt werden. Insbesondere werden die aktuellen Zusatzinformationen mit dem MPEG-4 Algorithmus kodiert.

## Beschreibung

Die Erfindung betrifft ein Verfahren zum Vorführen von Informationen, bei dem Stamminformationen auf einem Computer gespeichert werden, die danach auf mindestens einer Vorführvorrichtung vorgeführt werden.

Ein derartiges Verfahren wird bisher insbesondere in überregionalen Zügen eingesetzt, wobei die Vorführvorrichtungen als Computerbildschirme ausgebildet sind, auf denen die Stamminformationen einem Benutzer dargestellt werden. Die Stamminformationen werden an vorgegebenen Standorten wie bspw. in einem Betriebshof auf den Computer übertragen und bleiben bis zu einem nächsten Aufenthalt an einem derartigen Standort unverändert, da während der Fahrt zwischen zwei Betriebshöfen kein weiterer Datenaustausch stattfindet. Daher können mit den aus dem Stand der Technik bekannten Verfahren lediglich Informationen mit einer Aktualität vorgeführt werden, die an den Zeitpunkt der Übertragung der Stamminformationen geknüpft ist.

Weiterhin ist ein Verfahren bekannt, bei dem in Haltestellen von Bussen und U-Bahnen Informationen auf Bildschirmen oder Leinwänden vorgeführt werden. Dieses Verfahren nutzt bestehende Telefonverbindungen für die Übertragung der Daten aus, wodurch ein Vorführen auch aktueller Informationen möglich ist. Jedoch benötigt dieses Verfahren in jedem Fall eine direkte Datenverbindung, so daß es insbesondere bei bewegten Fahrzeugen nur über mobile Telefonverbindungen anwendbar ist. Die Kosten des Verfahrens sind daher erheblich.

Ausgehend von diesem Stand der Technik liegt der vorliegenden Erfindung das technische Problem zugrunde, das Verfahren zum Vorführen von Informationen in einem bewegten Fahrzeug dahingehend zu verbessern, daß Informationen in hoher Qualität mit gleichzeitiger Aktualisierbarkeit vorgeführt werden können.

Das zuvor aufgezeigte technische Problem ist erfindungsgemäß dadurch gelöst, daß das Vorführen der auf dem Computer gespeicherten Stamminformationen unterbrochen wird und daß aktuelle Zusatzinformationen auf den Computer übertragen und direkt auf der mindestens einen Vorführvorrichtung vorgeführt werden.

Somit ist erfindungsgemäß ein Unterbrechen des auf der Vorführvorrichtung vorgeführten Programms möglich, das aus den auf dem Computer gespeicherten Stamminformationen zusammengesetzt ist, um aktuelle Zusatzinformationen vorzuführen. Es können aktuelle politische, sportliche oder kulturelle Nachrichten während des Programms eingefügt oder eingeblendet werden. Für den Nutzer der Vorführvorrichtung ergibt sich somit der Eindruck eines aktuellen Programms.

Weiterhin werden nach Abschluß des Übertragens und Vorführens der aktuellen Zusatzinformationen die auf dem Computer gespeicherten Informationen wieder vorgeführt, also das zuvor unterbrochene Programm fortgeführt. Dadurch ergibt sich eine nahtlose Reihenfolge aus vorgeführten Stamminformationen und aktuellen Zusatzinformationen, wodurch sich der Eindruck eines separaten eigenständigen und aktuellen Programms ergibt.

In bevorzugter Weise werden die aktuellen Zusatzinformationen während des Vorführens auf dem Computer gespeichert, um wiederholt vorgeführt zu werden. Dadurch wird ein mehrfaches Übertragen der aktuellen Zusatzinformationen vermieden.

Bei einer weiteren Ausgestaltung der Erfindung werden zusätzlich zu den aktuellen Zusatzinformationen weitere Zusatzinformationen auf den Computer übertragen, die vom Computer ausgewertet werden. In Abhängigkeit von den weiteren Zusatzinformationen werden dann die auf der mindestens einen Vorführvorrichtung vorgeführten Informationen verändert. Insbesondere kann die Reihenfolge oder der Inhalt der vorgeführten Informationen verändert werden, ohne daß die weiteren Zusatzinformationen umgehend mit einer Unterbrechung des Programms direkt vorgeführt werden. Dem liegt die Erkenntnis zugrunde, das lediglich ein Teil der vorgeführten Informationen regelmäßig aktualisiert werden muß, während der weitaus größte Teil der Informationen eine ausreichende Aktualität besitzt, um als Stamminformationen auf dem Computer gespeichert zu sein. Daher können die Stamminformationen in größeren Datenmengen gespeichert sein, so daß zumindest der weitaus größte Teil der vorgeführten Informationen eine hohe Vorführqualität besitzt. Lediglich die zu aktualisierenden Informationen müssen als aktuelle oder weitere Zusatzinformationen auf den Computer übertragen werden. Diese Zusatzinformationen werden dann dazu verwendet, die vorgeführten Informationen zu verändern, insbesondere zu aktualisieren.

In weiter bevorzugter Weise werden die Zusatzinformationen mit Hilfe einer Sendevorrichtung und einer mit dem Computer verbundenen Empfangsvorrichtung übertragen. Dabei werden als Übertragungsmittel Funksignale in beliebiger Form und Kodierung eingesetzt. Dabei kommt es auf die Art der Übertragung der Zusatzinformationen bei der vorliegenden Erfindung nicht an. Neben einer Funkübertragung ist eine Übertragung mittels Powerline, also einem Aufmodulieren der Signale auf eine Spannungsversorgung, möglich.

In besonders bevorzugter Weise werden zumindest die aktuellen Zusatzinformationen mittels einer MPEG-4 Kodierung datenreduziert übertragen. Anschließend werden die kodierten Zusatzinformationen vom Computer dekodiert und in ein für ein Vorführen auf der Vorführvorrichtung geeignetes Format umgewandelt. Durch die mit der MPEG-4 Kodierung verbundene erhebliche Datenreduzierung wird eine hohe Vorführungsqualität auf den Computer trotz der durch die zuvor angegebenen Übertragungsmittel begrenzten Datenübertragungsraten möglich. Denn die aktuellen Zusatzinformationen werden für ein direktes Vorführen übertragen, so daß keine zeitlich vorgeschaltete Zwischenspeicherung erfolgt, mit der gegebenenfalls Beschränkungen der Datenübertragungsrate ausgeglichen werden können. Selbstverständlich können auch die weiteren Zusatzinformationen MPEG-4 kodiert sein, so daß auch diese in einer weitgehend verkürzten Übertragungsdauer auf den Computer übertragen werden können.

Das zuvor beschriebene Verfahren kann in einem bewegten Fahrzeug durchgeführt werden, wobei der Computer und die mindestens eine Vorführvorrichtung in dem Fahrzeug angeordnet werden. Das Verfahren kann daher für ein Fahrgastinformationssystem genutzt werden, um Fahrgäste von öffentlichen Verkehrsmitteln aktuell zu informieren und zu unterhalten. Darüber hinaus kann das Verfahren auch angewendet werden, um an festen Standorten, wie beispielsweise an Haltestellen, Bahnhöfen oder Flughäfen, die Informationen vorzuführen.

Als Stamminformationen dienen beispielsweise Kurzfilme, Videokunst, Computeranimation, Trickfilme sowie jegliche Form von Werbeinformationen. Als Zusatzinformationen können beispielsweise Haltestelleninformationen, Umsteige- und Anschlußinformationen, insbesondere auch für eine Vernetzung mit anderen öffentlichen oder privaten Verkehrsmitteln, Wetternachrichten, Nachrichtenschlagzeilen, Börseninformationen, Veranstaltungshinweise, Bürgerinformationen oder Touristikinformationen übertragen werden. Die aktuellen und weiteren Zusatzinformationen werden dann derart mit den Stamminformationen verbunden, daß in Abhängigkeit von den Zusatzinformationen die auf Vorführvorrichtungen dargestellten Informationen verändert, insbesondere aktualisiert werden.

Die Stamminformationen werden vorzugsweise mit Hilfe einer Datenleitung über Telefon, einem lokalen Netzwerk oder mittels Datenträgeraustausch auf den Computer übertragen. Das bedeutet für die Anwendung bei Fahrzeugen, daß die Stammdaten während des Aufenthaltes an vorgegebenen Standorten, wie bspw. Betriebshöfen, auf den Computer im Fahrzeug übertragen werden. Für stationäre Anwendungen werden die Stammdaten bspw. mittels einer Telefonverbindung auf dem Computer gespeichert, während die Zusatzinformationen - bspw. während der Fahrt - über die Sende- und Empfangsvorrichtungen übertragen werden.

Die bisher angeführten Beispiele beziehen sich darauf, daß die Stamm- und Zusatzinformationen zu bildlichen Informationen verarbeitet werden. Darüber hinaus läßt sich das erfindungsgemäße Verfahren auch für akustische Informationen oder auch für eine Kombination von bildlichen und akustischen Informationen nutzen.

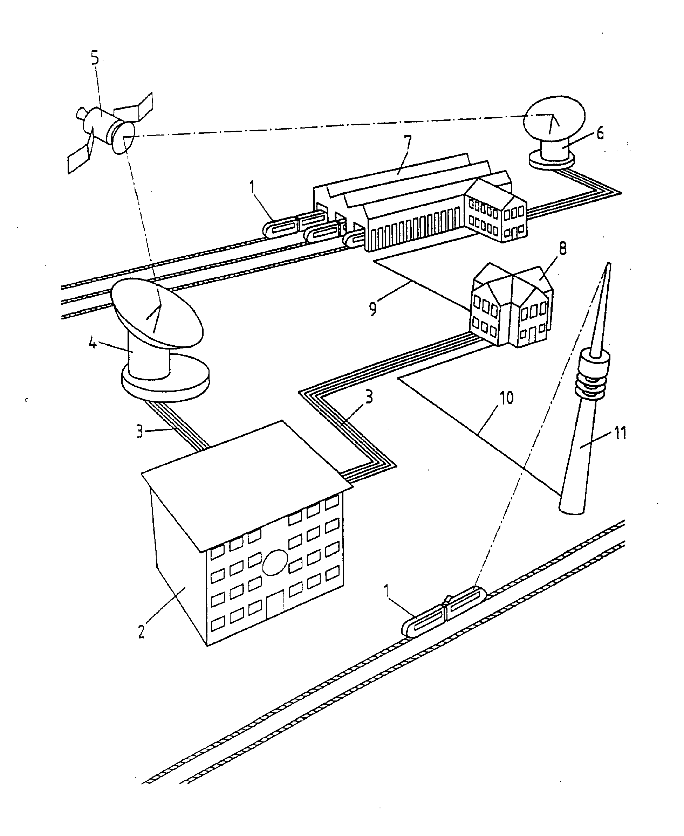

Im folgenden wird die Erfindung anhand eines Ausführungsbeispieles näher erläutert, wobei auf die beigefügte Zeichnung Bezug genommen wird. In der Zeichnung zeigt die einzige Figur ein Ausführungsbeispiel des erfindungsgemäßen Verfahrens zum Vorführen von Informationen in einem Schienenfahrzeug in einer schematischen perspektivischen Darstellung.

In einem Sendestudio 2 findet eine sogenannte Offline-Produktion statt, bei der alle Grundlagen für ein Programm einer vorgegebenen Zeiteinheit, beispielsweise ein tägliches Programm in Form von einzelnen Filmen erstellt. Vom Sendestudio 2 werden die vorgeplanten Informationen, beispielsweise Filmbeiträge, die Informationen aus Wirtschaft und Handel oder Werbeinformationen enthalten, über ein Intranet 3 an einen Sender 4 weitergegeben. Der Sender 4 überträgt die Informationen über einen Satelliten 5 und einen Empfänger 6 auf mindestens einen Betriebshof 7 des Betreibers der Schienenfahrzeuge 1. Im Betriebshof 7 werden die vom Sendestudio 2 empfangenen Informationen als Stamminformationen auf den im Schienenfahrzeug 1 angeordneten Computer (nicht dargestellt) übertragen. Somit findet eine Aktualisierung der Stamminformationen auf dem Computer während des Aufenthaltes des Schienenfahrzeuges 1 im Betriebshof 7 statt. Die Datenübertragung kann dabei mit Hilfe einer Datenleitung, einem lokalen Netzwerk oder mittels Datenträgeraustausch auf den Computer erfolgen.

Nachdem das Schienenfahrzeug 1 den Betriebshof 7 verlassen hat, werden die Stamminformationen auf Bildschirmgeräten (nicht dargestellt), die als Vorführvorrichtungen dienen, in einer vorprogrammierten Reihenfolge vorgeführt.

In einem zweiten Sendestudio 8, das im Ausführungsbeispiel getrennt vom ersten Sendestudio 2 ist und über das Intranet ebenfalls die Stamminformationen vom ersten Sendestudio 2 erhält, werden aktuelle Informationen gesammelt und in Form von Graphikobjekten, Texten und Skripten zusammengestellt. Dazu werden zum einen allgemeine Informationen in Form von Nachrichten aus Politik und Handel sowie Wetterprognosen gesammelt. Zum anderen werden aktuelle Meldungen von dem Betriebshof 7 bzw. von allen Betriebshöfen 7 des Betreibers über ein Intranet 9 übertragen. Diese Meldungen beziehen sich bspw. auf Fahrplaninformationen, die insbesondere Verspätungsmeldungen von Schienenfahrzeugen 1 des Betreibers beinhalten können.

Die zusammengefaßten aktuellen Informationen werden vom Sendestudio 8 über ein Intranet 10 auf einen Sender 11 übertragen. Von diesem werden die aktuellen Informationen als Zusatzinformationen auf die Schienenfahrzeuge 1 insbesondere dann übertragen, wenn sie unterwegs sind, also sich außerhalb der Betriebshöfe 7 befinden.

Die Zusatzinformationen werden zunächst auf einem Produktionsrechner im Betriebshof 7 der Online-Produktion als Graphiken, Bilder, Texte und/oder Skripte erzeugt. Diese werden in einer für die Ausstrahlung geeignete Form konvertiert und kodiert.

Der im Schienenfahrzeug 1 eingebaute Empfänger (nicht dargestellt) empfängt die ausgestrahlten Daten des ausgestrahlten Funksignals. Der Computer, der mit dem Empfänger verbunden ist, dekodiert anschließend die empfangenen Signale in die ursprünglichen Graphiken, Bilder, Texte und Skripte als Zusatzinformationen.

Sofern es sich bei den Zusatzinformationen um Graphiken, Bilder oder Texte handelt, werden diese vom Computer an gegebenenfalls vorgegebenen Positionen in das laufende Programm eingefügt. Dabei kann es sich beispielsweise um aktuelle Nachrichten oder um Fahrgastinformationen handeln.

Das erfindungsgemäße Verfahren ermöglicht nun während der Fahrt der Schienenfahrzeuge 1 eine Unterbrechung des laufenden Programms, das sich aus den auf dem Computer gespeicherten Stamminformationen und Zusatzinformationen zusammensetzt, um aktuelle Zusatzinformationen direkt zu übertragen und vorzuführen. Für eine Unterbrechung des Programms muß zunächst eine Zusatzinformation in Form eines Steuerbefehls übertragen werden, um den Computer für eine Unterbrechung und ein nachfolgendes direktes Vorführen der aktuellen Zusatzinformationen anzusteuern. Anschließend werden diese vorgeführt, bis erneut ein Steuerbefehl als weitere Zusatzinformation übertragen wird, um den Computer zum Fortführen des bisherigen Programms zu veranlassen.

Im dargestellten Ausführungsbeispiel werden zumindest die Zusatzdaten vor der Übertragung mit dem MPEG-4 Algorithmus datenreduziert kodiert, so daß eine erhebliche Datenreduzierung erreicht wird. Diese Reduzierung ermöglicht ein Vorführen der aktuellen Zusatzinformationen mit hoher Qualität auch bei einer begrenzten Datenübertragungsrate, die durch die beispielhaft beschriebene Übertragungsart vorgegeben ist.

Der MPEG-4 Standard (Moving Picture Experts Group) beschäftigt sich mit der Beschreibung bzw. Kodierung, der Übertragung und der Synchronisation audiovisueller Datenobjekte. Diese werden mit Hilfe einer Szenenbeschreibungssprache, die Konzepte der VRML (Virtual Reality Modeling Language) verwendet, zu einer Szene zusammengesetzt. Diese Sprache ermöglicht, die Objekte räumlich und zeitlich anzuordnen. Die Szenenbeschreibung und die Objekte der Szene werden individuell kodiert und übertragen.

MPEG-4 gliedert den Inhalt eines Bildes in Objekte, die gezielt angesprochen werden können. Mit Hilfe der MPEG-4 Syntactic Description Language (MSDL) soll es Anwendungsprogrammierern ermöglicht werden, Objekte weiterverarbeiten zu können, die der MPEG-4-Algorithmus identifiziert hat. Damit wurde der objektorientierte Ansatz auch in den Videobereich einbezogen.

Der MPEG-4-Algorithmus identifiziert Bildsegmente als eigenständige Objekte, beispielsweise Gesicht, Haare und Jacke einer Person, und weist sie als solche aus. Die Objekte können dann angesprochen und manipuliert werden, beispielsweise kann ein neuer Hintergrund eingeblendet werden.

MPEG-4 baut auf den Standard MPEG-2 auf und soll möglichst viele Anwendungsbereiche abdecken. Ein für die vorliegende Erfindung wichtiger Aspekt besteht darin, daß eine bessere Bildqualität bei vergleichbarer Bitrate des kodierten Signals gegenüber schon bestehenden Standards erreicht wird.

## Patentansprüche

1. Verfahren zum Vorführen von Informationen,
- bei dem Stamminformationen auf einem Computer gespeichert werden, die danach auf mindestens einer Vorführvorrichtung vorgeführt werden,
**dadurch gekennzeichnet,**
- **daß** das Vorführen der auf dem Computer gespeicherten Stamminformationen unterbrochen wird und
- **daß** aktuelle Zusatzinformationen auf den Computer übertragen und direkt auf der mindestens einen Vorführvorrichtung vorgeführt werden.

2. Verfahren nach Anspruch 1,
bei dem nach Abschluß des Übertragens und Vorführens der aktuellen Zusatzinformationen wieder die auf dem Computer gespeicherten Informationen vorgeführt werden.

3. Verfahren nach Anspruch 1 oder 2,
bei dem die aktuellen Zusatzinformationen während des Vorführens auf dem Computer gespeichert werden, um wiederholt vorgeführt zu werden.

4. Verfahren nach einem der Ansprüche 1 bis 3,
bei dem weitere Zusatzinformationen auf den Computer übertragen werden, bei dem die Zusatzinformationen vom Computer ausgewertet werden und bei dem in Abhängigkeit von den Zusatzinformationen die auf der mindestens einen Vorführvorrichtung vorgeführten Informationen verändert werden.

5. Verfahren nach einem der Ansprüche 1 bis 4,
bei dem die Zusatzinformationen mit Hilfe einer Sendevorrichtung und einer mit dem Computer verbundenen Empfangsvorrichtung übertragen werden.

6. Verfahren nach einem der Ansprüche 1 bis 5,
bei dem zumindest die aktuellen Zusatzinformationen mittels einer MPEG-4 Kodierung datenreduziert übertragen werden.

7. Verfahren nach Anspruch 6,
bei dem die kodierten Zusatzinformationen vom Computer dekodiert und in ein für ein Vorführen auf der Vorführvorrichtung geeignetes Format umgewandelt werden.

8. Verfahren nach einem der Ansprüche 1 bis 7,
bei dem die Informationen in einem bewegten Fahrzeug vorgeführt werden und der Computer und die mindestens eine Vorführvorrichtung in dem Fahrzeug angeordnet werden.
